# EUROPÄISCHE PATENTSCHRIFT

(11) **EP 1 120 313 B1**
(45) Veröffentlichungstag und Bekanntmachung des Hinweises auf die Patenterteilung: **22.08.2007**
(21) Anmeldenummer: 01101569.0
(22) Anmeldetag: 25.01.2001
(51) Int. Cl.: B60R 1/12, B60R 11/04, B60R 25/00, B60R 21/01, B60K 28/06

(54) **Überwachungseinrichtung für Fahrzeuge, vorzugsweise für Kraftfahrzeuge**
Monitoring device for a vehicle, preferably a motor vehicle
Dispositif de surveillance pour véhicules, de préférence véhicules à moteur

(30) Priorität: 28.01.2000 DE 10003643
(43) Veröffentlichungstag der Anmeldung: 01.08.2001
(73) Patentinhaber: Schefenacker Patents S.à.r.l., 2346 Luxembourg (LU)
(72) Erfinder: Steffel, Hans-Clemens, 70327 Stuttgart (DE)
(74) Vertreter: Jackisch-Kohl, Anna-Katharina

(56) Entgegenhaltungen:
- EP-A- 0 736 414
- EP-A- 0 974 486
- DE-A- 4 228 794
- US-A- 5 877 897

## Beschreibung

Die Erfindung betrifft eine Überwachungseinrichtung für Fahrzeuge, vorzugsweise für Kraftfahrzeuge, nach dem Oberbegriff des Anspruches 1.

Es sind Innenrückblickspiegel von Kraftfahrzeugen bekannt, die mit einer Kamera ausgestattet sind. Damit der Innenrückblickspiegel seine Funktion erfüllen kann, ist das Spiegelglas mit einer Aussparung versehen. Aus ästhetischen Gründen sind jedoch Aussparungen in der Reflexionsschicht von Spiegelgläsern nicht gern gesehen. Oft soll die Kamera auch unsichtbar bleiben. In der Automobilindustrie bestehen zudem Vorschriften, die sich auf die geometrischen Ausmaße der Spiegelfläche beziehen.

Bei der Überwachungseinrichtung (DE-A-42 28 794) befinden sich in einem Gehäuse eines Außenrückblickspiegels zwei Videokameras, die durch das Spiegelglas hindurch Bilder aufnehmen. Mit den Videokameras wird ein Totwinkelbereich des Außenrückblickspiegels erfaßt. Bei ungenügenden Beleuchtungsverhältnissen werden zusätzlich temperaturempfindliche Sensoren als die Verkehrssituation registrierende Elemente eingesetzt. Mit ihnen wird bei Dunkelheit das Vorhandensein von Fahrzeugen im Bereich des toten Winkels ermittelt.

Es sind weiter gattungsgemäßen Rückblickspiegel von Kraftfahrzeugen bekannt (US-A-5 877 897), die mit EC-Spiegelgläsern versehen sind. Fällt Blendlicht auf die Spiegelgläser, werden über Fotosensoren Signale an eine Steuereinrichtung geliefert, welche die PC-Spiegelgläser abdunkelt und so eine Blendung des Fahrers verhindert.

Es ist auch bekannt (EP-A-0 736 414), in einem Außenrückblickspiegel eines Kraftfahrzeuges ein optisches Abtastsystem mit einer Kamera unterzubringen, mit der ein Fahrbahnbereich seitlich neben dem Kraftfahrzeug erfaßt wird. Die Abtasteinrichtung dient unter anderem als Einschlafwarnfunktion zur Warnung vor einem drohenden Überschreiten einer seitlichen Fahrspurmarkierung. Auch kann mit der optischen Abtasteinrichtung eine automatische Spurhaltung des Kraftfahrzeuges erreicht werden.

Der Erfindung liegt die Aufgabe zugrunde, die gattungsgemäße Überwachungseinrichtung so auszubilden, daß die Kamera hinter dem Spiegelglas nicht sichtbar ist, das Spiegelglas aber dennoch seine Funktion einwandfrei erfüllen kann.

Diese Aufgabe wird bei der gattungsgemäßen Überwachungseinrichtung erfindungsgemäß mit den kennzeichnenden Merkmalen der Ansprüche 1 und 2 gelöst.

Bei der erfindungsgemäßen Überwachungseinrichtung liegt die Kamera hinter der Spiegelschicht, die im sichtbaren Spektralbereich vorzugsweise bis 50% reflektierend ausgebildet ist. Dadurch ist die Kamera hinter dem Spiegelglas nicht sichtbar, während das Spiegelglas die gewünschte hohe Reflexion aufweist. Wird das Spiegelglas beispielsweise in einem Innenrückblickspiegel eines Kraftfahrzeuges verwendet, hat die Spiegelschicht ein Reflexionsspektrum, das zu einem Mindestprozentsatz, wie es in den Automobilspiegel-Vorschriften vorgeschrieben ist, Licht reflektiert. Vorteilhaft ist die Kamera eine CCD- oder CMOS-Kamera. Das Spiegelglas mit der Spiegelschicht ist im nahen Infrarotbereich ausreichend transparent, so daß mit einer solchen Kamera Videobilder aufgenommen werden können. Für den Fall, daß die Beleuchtung nicht ausreichend ist, kann mit der Zusatzbeleuchtung, vorzugsweise mit LEDs, die eine Wellenlänge aussenden, für welche die Spiegelschicht ausreichend transparent ist und für welche die Kamera eine ausreichende Empfindlichkeit besitzt, zusätzlich beleuchtet werden. Durch beispielsweise Schieben des transparenten Spektralbereiches des Spiegelglases entlang der Wellenlängenachse derart, daß die Transmission einen maximalen Wert annimmt und gleichzeitig das Empfindlichkeitsmaximum der CCD- oder CMOS-Kamera abdeckt, kann bei schlechten Lichtverhältnissen im sichtbaren Bereich, unbemerkt durch das menschliche Auge, der erforderliche Bereich zusätzlich beleuchtet werden. Die Zusatzbeleuchtung wird vorteilhaft durch Infrarot-LEDs gebildet, die Licht in einem Wellenlängenbereich aussenden, der im Transmissionsbereich der Spiegelschicht liegt und für den die Kamera die geforderte Empfindlichkeit aufweist. Die Zusatzbeleuchtung kann hinter der Spiegelschicht angeordnet oder im Randbereich des Spiegelgehäuses liegen, der aus einem für das menschliche Auge undurchsichtigen Material besteht.

Die Kamera ist vorteilhaft an die Stromversorgung des Fahrzeuges angeschlossen. Die von ihr aufgenommenen Videobilder können in einem Monitor dargestellt werden. Es ist aber auch möglich, die Videobilder auf einem Speichermedium, beispielsweise einem Videoband, einer Festplatte oder dergleichen zu speichern. Es ist auch möglich, gleichzeitig das aufgenommene Bild zu speichern und im Monitor darzustellen.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsbeispiele näher erläutert. Es zeigen
- Fig. 1: in Seitenansicht und in schematischer Darstellung eine erfindungsgemäße Vorrichtung,
- Fig. 2: in einer Darstellung entsprechend Fig. 1 eine zweite Ausführungsform einer erfindungsgemäßen Vorrichtung,
- Fig. 3: in einer Darstellung entsprechend Fig. 1 eine dritte Ausführungsform einer erfindungsgemäßen Vorrichtung,
- Fig. 4: eine Ansicht eines für ein Kraftfahrzeug vorgesehenen Innenrückblickspiegels, in dem eine erfindungsgemäße Vorrichtung untergebracht ist,
- Fig. 5: in schematischer Darstellung einen Schnitt durch den Innenrückblickspiegel gemäß Fig. 4,
- Fig. 6 bis Fig. 15: jeweils in Darstellungen entsprechend den Fig. 4 und 5 unterschiedlich ausgebildete Innenrückblickspiegel von Kraftfahrzeugen.

Die Fig. 8 und Fig 9 Darstellungen gehörm nicht zu dieser Erfindung.

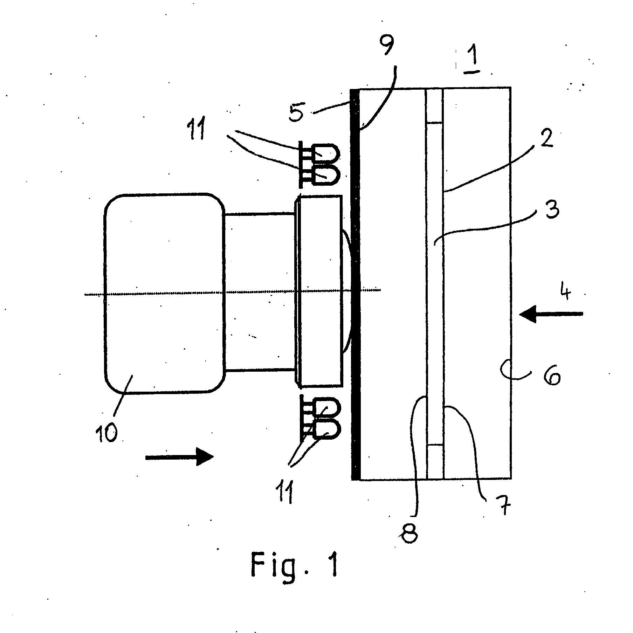

Fig. 1 zeigt ein EC-Spiegelglas 1 für Innenrückblickspiegel von Kraftfahrzeugen. Das EC-Spiegelglas 1 weist etwa in halber Dicke einen Aufnahmeraum 2 für eine EC-Flüssigkeit 3 auf. Der Fahrer des Kraftfahrzeuges blickt in Richtung des Pfeiles 4 auf das Spiegelglas 1. An der vom Fahrer abgewandten Rückseite des EC-Spiegelglases 1 befindet sich eine Rückseiteninterferenzspiegelschicht 5. Die Interferenzspiegelschicht 5 erstreckt sich vorteilhaft über die gesamte Rückseite des EC-Spiegelglases 1. Aufgrund des beschriebenen Aufbaus hat das EC-Spiegelglas vier Seiten 6 bis 9. Die Interferenzspiegelschicht 5 ist an der vom Fahrer abgewandten Seite 9 des EC-Spiegelglases vorgesehen.

Hinter dem EC-Spiegelglas befindet sich eine Kamera 10, die vorteilhaft eine CCD- oder CMOS-Kamera ist. Mit dieser Kamera 10 ist die Aufnahme von Videobildern möglich. Für den Fall, daß die Beleuchtung für die Kamera 10 nicht ausreichen sollte, sind Leuchtmittel 11 vorgesehen, die vorteilhaft LEDs sind. Die Leuchtmittel 11 sind in einer für die Beleuchtung ausreichenden Anzahl vorgesehen und senden eine Wellenlänge aus, für welche das EC-Spiegelglas 1 ausreichend transparent ist und für welche die verwendete Kamera 10 eine ausreichende Empfindlichkeit besitzt. Je nach den Lichtverhältnissen können die Leuchtmittel 11 zugeschaltet werden, um optimal ausgeleuchtete Videobilder zu erhalten.

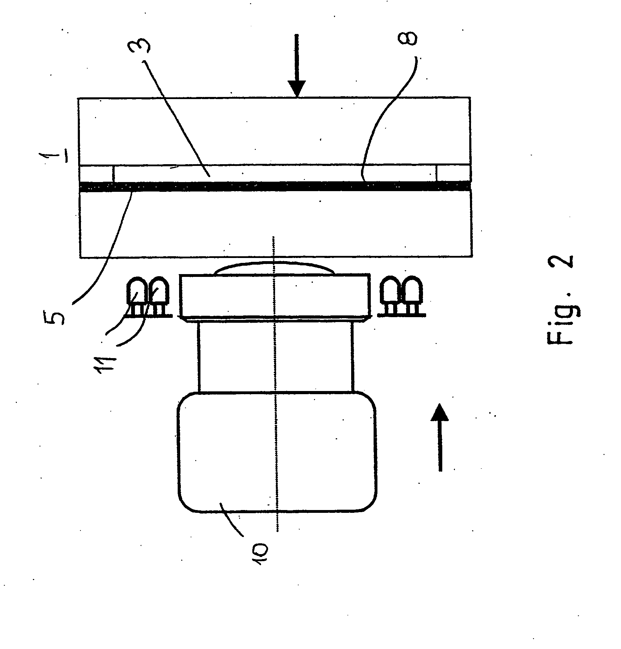

Fig. 2 zeigt die Möglichkeit, die Interferenzspiegelschicht 5 auf der dritten Seite 8 in direktem Kontakt zur EC-Flüssigkeit 3 vorzusehen. Da die Interferenzspiegelschicht 5 nicht an der Rückseite des EC-Spiegelglases 1 vorgesehen ist, bildet sie eine Vorderseiteninterferenzspiegelschicht. Im übrigen sind das EC-Spiegelglas 1 sowie die Kamera 10 und die Leuchtmittel 11 gleich ausgebildet wie beim vorigen Ausführungsbeispiel.

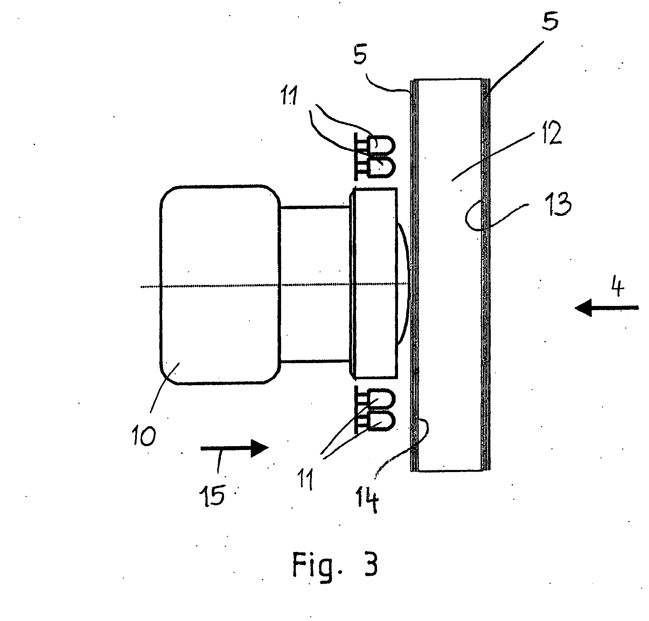

Fig. 3 zeigt die Möglichkeit, die Kamera 10 auch dann einzusetzen, wenn kein EC-Spiegelglas vorhanden ist. Das Spiegelglas 12 gemäß Fig. 3 hat lediglich zwei Seiten, nämlich die dem Fahrer zugewandte Vorderseite 13 sowie die Rückseite 14. Die Interferenzspiegelschicht 5 kann wahlweise an der Vorderseite 13 oder an der Rückseite 14 vorgesehen sein. Der Fahrer blickt wieder in Richtung des Pfeiles 4 auf das Spiegelglas 12. Die Kamera 10 hinter dem Spiegelglas 12 ist in Richtung des Pfeiles 15 gerichtet. Sie kann entsprechend den beiden vorigen Ausführungsbeispielen eine CCD- oder CMOS-Kamera sein. Zusätzlich können die Leuchtmittel 11 vorgesehen werden, die sich entsprechend den vorigen Ausführungsbeispielen ebenfalls auf der von der Fahrerblickrichtung 4 abgewandten Seite des Spiegelglases 12 befinden.

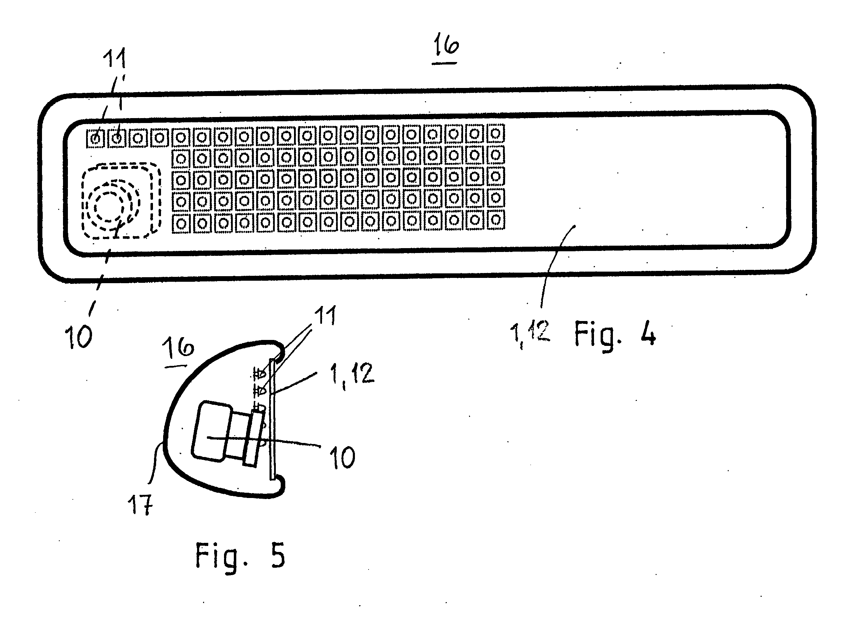

Die Fig. 4 und 5 zeigen einen Innenrückblickspiegel 16 mit einem Spiegelgehäuse 17, in dessen offener Vorderseite das Spiegelglas 1 oder 12 eingesetzt ist. Die Kamera 10 befindet sich hinter dem Spiegelglas 1, 12 in der linken unteren Ecke des in Ansicht rechteckförmigen Innenrückblickspiegels 16. Die Kamera 10 kann, wie Fig. 5 zeigt, leicht nach unten geneigt angeordnet sein. Hinter dem Spiegelglas 1, 12 befinden sich die Leuchtmittel 11, die gemäß Fig. 4 in Reihen neben- und übereinander angeordnet sind. Sie sind vorteilhaft, bis auf den Bereich der Kamera 10, über die gesamte Rückseite des Spiegelglases 1, 12 vorgesehen. Die Anordnung gemäß den Fig. 4 und 5 ist dann vorteilhaft, wenn ein herkömmliches Spiegelglas 12 für den Innenrückblickspiegel 16 verwendet wird.

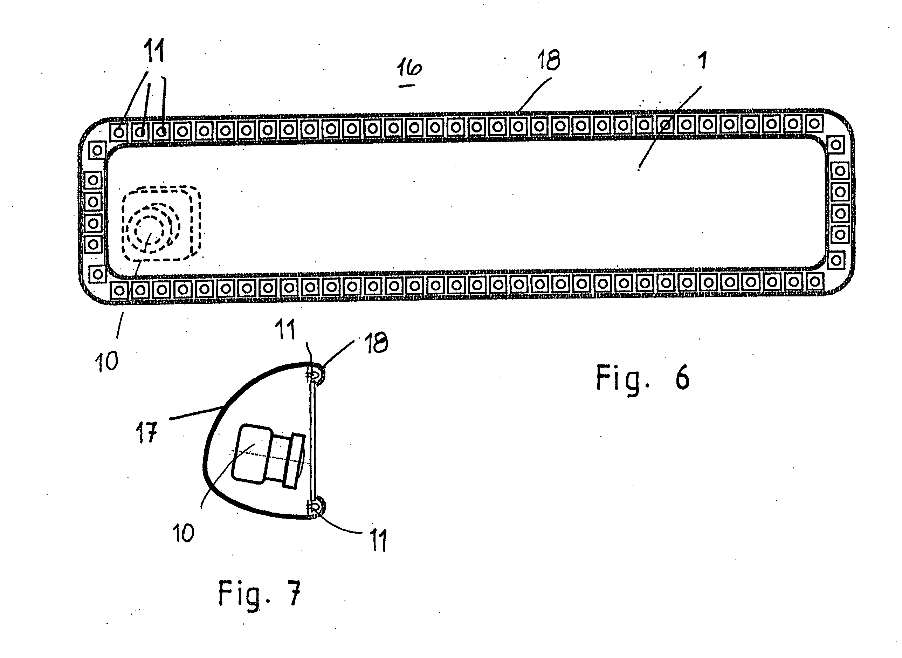

Hat der Innenrückblickspiegel 16 das EC-Spiegelglas 1 (Fig. 6 und 7), werden die Leuchtmittel 11, die entsprechend den vorhergehenden Ausführungsformen Infrarot-Sende-LEDs sind, vorteilhaft im Randbereich 18 des Spiegelgehäuses 17 angeordnet. Wenn eine herkömmliche Titan- bzw. Chrom- bzw. Titan-Chromschicht als Spiegelschicht verwendet werden soll, kann die Transmission zusammen mit der abgedunkelten EC-Schicht bereits so gering werden, daß die zusätzliche Beleuchtung notwendig werden kann. Es wird vorteilhaft eine Infrarot-Beleuchtung im Spektralbereich der Kameraempfindlichkeit gewählt. Da die Verluste durch das zweimalige Durchdringen der Spiegelschicht und der EC-Schicht 3 (Fig. 1) zu groß werden, sind die Infrarot-Sende-LEDs vorteilhaft im Randbereich 18 des Spiegelgehäuses 17 untergebracht. Der Randbereich 18 besteht aus einem Kunststoff, der für die IR-Strahlen der Leuchtmittel 11 durchlässig ist, im für das menschliche Auge sichtbaren Teil des elektromagnetischen Spektrums hingegen undurchsichtig ist. Dadurch ist gewährleistet, daß der Fahrer oder die Fahrzeuginsassen die Leuchtmittel 11 nicht bemerken. Im übrigen ist der Innenrückblickspiegel 16 gleich ausgebildet wie bei der Ausführungsform nach den Fig. 4 und 5.

Die Kamera 10 kann an einer beliebigen Stelle hinter dem Spiegelglas 1, 12 angeordnet sein. Sie wird so vorgesehen, daß sie den für den jeweiligen Verwendungszweck notwendigen Sichtbereich erfaßt. Da in Innenrückblickspiegeln häufig weitere Einrichtungen, wie Garagentoröffner, EC-Elektronik, Memoryantrieb und dergleichen angeordnet sind, wird die Kamera 10 so angeordnet, daß die Funktion dieser Vorrichtungen nicht beeinträchtigt wird.

Bei den beschriebenen und noch zu erläuternden Ausführungsformen kann entsprechend den räumlichen Verhältnissen im Kraftfahrzeug eine Zusatzbeleuchtung außerhalb des Innenrückblickspiegels 16 vorgesehen sein. So kann eine solche Zusatzbeleuchtung in die Fondleuchte und/oder Deckenleuchte und/oder Leseleuchte für die hinteren Fahrzeuginsassen in PKWs und/oder Bussen integriert werden. Es ist auch möglich, die Zusatzbeleuchtung in der A-, B-, C- oder D-Säule oder einer beliebigen weiteren Säule im Kraftfahrzeug unterzubringen.

In besonderen Einsatzfällen kann an die Kamera 10 auch ein bildübertragendes Faserbündel 19 angeschlossen werden. Die Optiken dieser Faserbündel 19 haben Durchmesser bis hinunter in die Größenordnung von 1 mm. Die Kamera 10 kann im Gegensatz zu den vorigen Ausführungsbeispielen ohne direkte Sicht in den Fahrzeuginnenraum im Spiegelgehäuse 17 untergebracht werden. Das Bild wird mittels einer Optik 20 am Kopf des Faserbündels 19 eingefangen und zu den lichtempfindlichen Flächen der Kamera 10 geleitet. Die Leuchtmittel 11 sind wie bei der Ausführungsform gemäß den Fig. 6 und 7 im Randbereich 18 des Spiegelgehäuses 17 vorgesehen. Die Infrarot-Sende-LEDs 11 sind entsprechend dem vorigen Ausführungsbeispiel über den gesamten Umfang des Randbereiches 18 des Spiegelgehäuses 17 gleichmäßig verteilt angeordnet.

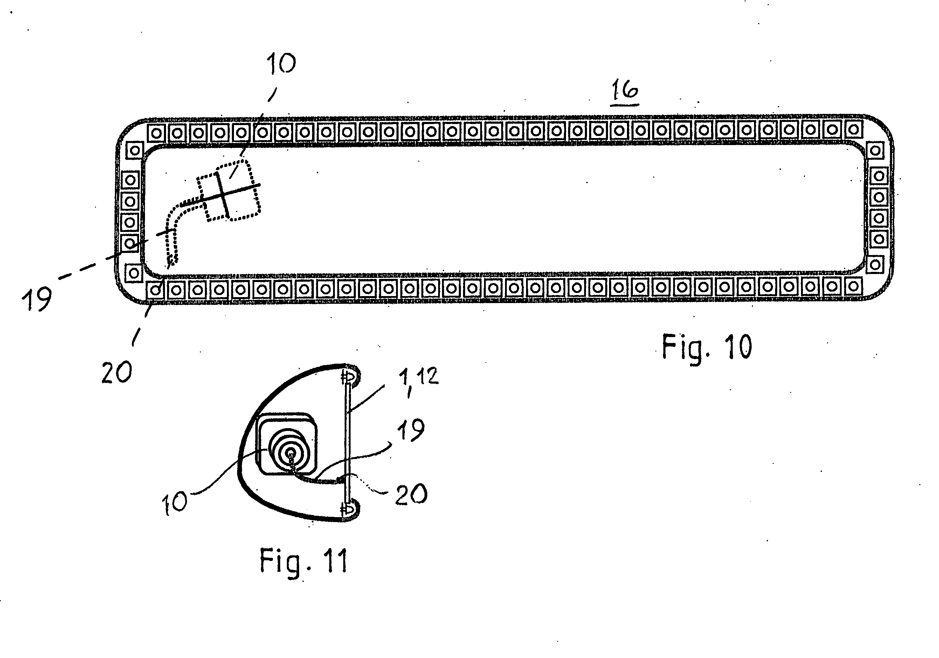

Die Fig. 10 und 11 zeigen eine Ausführungsform, bei welcher der Optikkopf 20 des Faserbündels 19 hinter dem infrarotdurchlässigen Spiegelglas 1, 12 angeordnet ist. Da das Spiegelglas 1, 12 für das menschliche Auge undurchsichtig ist, sind die Kamera 10 und das Faserbündel 19 von den Fahrzeuginsassen nicht zu erkennen. Im übrigen ist der Innenrückblickspiegel 16 gleich ausgebildet wie die Ausführungsform nach den Fig. 8 und 9.

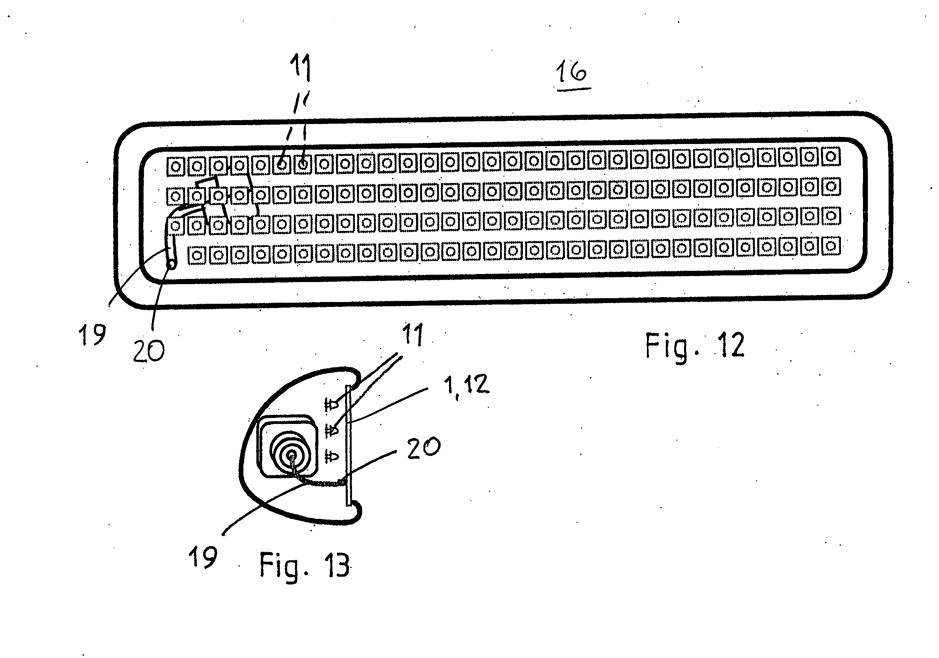

Die Fig. 12 und 13 zeigen einen Innenrückblickspiegel 16, bei dem der Optikkopf 20 des Faserbündels 19 entsprechend der vorigen Ausführungsform hinter dem Spiegelglas 1, 12 angeordnet ist. Die Infrarot-Sende-LEDs 11 sind hinter dem Spiegelglas 1, 12 in Reihen über- und untereinander angeordnet. Vorteilhaft sind die Leuchtmittel 11 über die gesamte Rückseite des Spiegelglases 1, 12 gleichmäßig verteilt angeordnet.

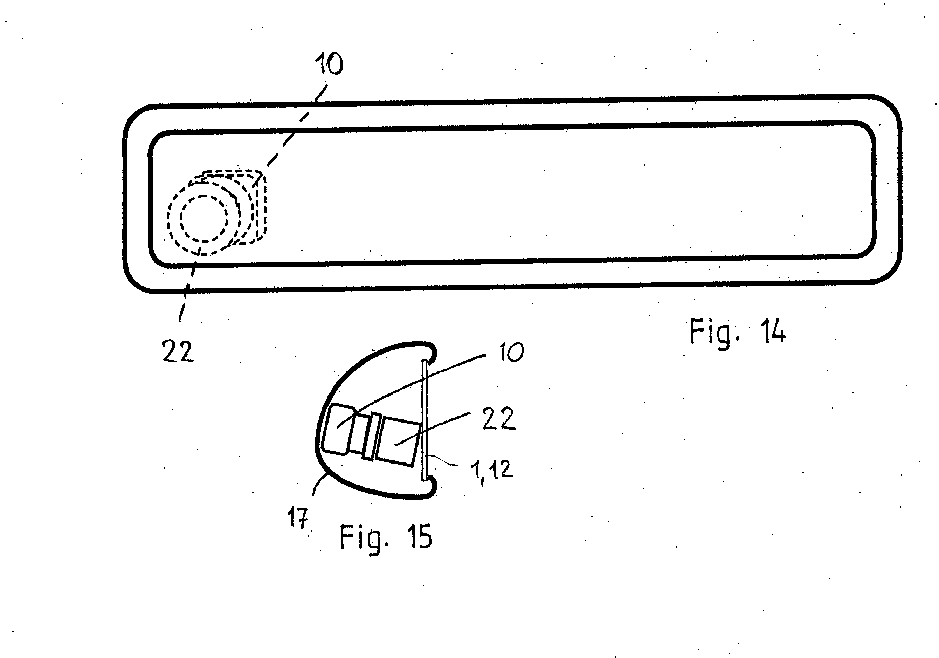

Als Alternative zur aktiven Beleuchtung mittels der Infrarot-Sende-LEDs 11 kann eine Restlichtverstärkerröhre 22 (Fig. 14 und 15) vor der Kameraoptik integriert sein. Die Restlichtverstärkerröhre 22 bildet eine Bildverstärkerröhre bzw. Bildwandlerröhe, die auch bei extrem schlechten Lichtverhältnissen eine sichere Beobachtung des Fahrzeuginnenraumes im sichtbaren und im nahen infraroten Wellenlängenbereich ermöglicht. Die Kamera 10 ist hinter dem Spiegelglas 1, 12 im Spiegelgehäuse 16 untergebracht. Je nach Einsatzzweck wird die Kamera 10 so im Spiegelgehäuse 17 angeordnet, daß sie den für den jeweiligen Verwendungszweck notwendigen Sichtbereich erfaßt.

Damit von der Kamera 10 vom Fahrzeuginnenraum aus nichts zu sehen ist, ist bei den beschriebenen Ausführungsformen die Rückseite des Spiegelglases 1, 12, mit einem schwarzen Lack überzogen. Für den Fall, daß die Infrarot-Zusatzbeleuchtung 11 hinter dem Spiegelglas 1, 12 verwendet wird, ist der Lack für infrarotes Licht mit der jeweiligen Wellenlänge transparent, im sichtbaren Wellenlängenbereich undurchsichtig. Die Optik ist entspiegelt und von hinten sowie von der Seite her lichtdicht auf der Rückseite des Spiegelglases 1, 12 so befestigt, daß seitliches Streulicht durch die Spiegelschicht nicht eindringen und vom Endbenutzer, beispielsweise dem Fahrer, nicht gesehen werden kann.

Die Kamera 10 kann für die unterschiedlichsten Anwendungen eingesetzt werden. So kann sie beispielsweise zur Fahreridentifikation, zur Fahrerzustandsüberwachung, zur Insassenerkennung und Insassenposition, zur Airbagsteuerung, zur Diebstahlüberwachung und dergleichen eingesetzt werden. So ist es beispielsweise möglich, die Kamera 10 mit der Fahrzeugelektrik so zu verbinden, daß das Fahrzeug nur dann in Gang gesetzt werden kann, wenn der befugte Fahrer hinter dem Steuer des Kraftfahrzeuges sitzt. Es ist weiter möglich, beispielsweise ein Warnsignal auszulösen, falls der Fahrer am Steuer einschlafen sollte.

## Patentansprüche

1. Überwachungseinrichtung für Fahrzeuge, vorzugsweise für Kraftfahrzeuge, mit wenigstens einem in einem Spiegelgehäuse (17) angeordneten Spiegelglas (1, 12), das eine im sichtbaren Spektralbereich reflektierend wirkende Spiegelschicht (5) aufweist, hinter der wenigstens eine Kamera (10) angeordnet ist,
**dadurch gekennzeichnet, daß** der Kamera (10) eine Zusatzbeleuchtung (11) zugeordnet ist, die hinter der Spiegelschicht (5) angeordnet ist und Licht in einer Wellenlänge aussendet, für welche die Spiegelschicht (5) durchlässig ist, und daß die Kamera (10) Videobilder durch die Spiegelschicht (5), die sich über die gesamte Rück- und/oder Vorderseite des Spiegelglases erstreckt, hindurch aufnimmt.

2. Überwachungseinrichtung für Fahrzeuge, vorzugsweise für Kraftfahrzeuge, mit wenigstens einem in einem Spiegelgehäuse (17) angeordneten Spiegelglas (1, 12), das eine im sichtbaren Spektralbereich reflektierend wirkende Spiegelschicht (5) aufweist, hinter der wenigstens eine Kamera (10) angeordnet ist,
**dadurch gekennzeichnet, daß** die Kamera (10) Videobilder durch die Spiegelschicht (5), die sich über die gesamte Rück- und/oder Vorderseite des Spiegelglases erstreckt, hindurch aufnimmt, und daß der Kamera (10) eine Zusatzbeleuchtung (11) in Form von LEDs zugeordnet ist, die im Randbereich (18) des Spiegelgehäuses (17) liegt, der aus einem für das menschliche Auge undurchsichtigem Material besteht.

3. Überwachungseinrichtung nach Anspruch 1 oder 2,
**dadurch gekennzeichnet, daß** die Spiegelschicht (5) eine Interferenzspiegelschicht, eine Chromspiegelschicht oder eine Titan-ChromSpiegelschicht ist.

4. Überwachungseinrichtung nach einem der Ansprüche 1 bis 3,
**dadurch gekennzeichnet, daß** das Spiegelglas (1) ein EC-Spiegelglas oder ein herkömmliches Spiegelglas ist.

5. Überwachungseinrichtung nach Anspruch 4,
**dadurch gekennzeichnet, daß** das EC-Spiegelglas (1) eine EC-Schicht (3) aufweist, hinter der die Spiegelschicht (5) vorgesehen ist.

6. Überwachungseinrichtung nach einem der Ansprüche 1 bis 5,
**dadurch gekennzeichnet, daß** die Zusatzbeleuchtung (11) Licht außerhalb des sichtbaren Spektrums aussendet.

7. Überwachungseinrichtung nach einem der Ansprüche 1 bis 6,
**dadurch gekennzeichnet, daß** die Zusatzbeleuchtung (11) durch LEDs, vorzugsweise durch Infrarot-Sende-LEDs, gebildet ist.

8. Überwachungseinrichtung nach einem der Ansprüche 1 bis 7,
**dadurch gekennzeichnet, daß** die Zusatzbeleuchtung (11) durch in Reihen neben- und untereinander angeordnete LEDs gebildet ist.

9. Überwachungseinrichtung nach einem der Ansprüche 1 bis 8,
**dadurch gekennzeichnet, daß** an die Kamera (10) ein bildübertragendes Faserbündel (19) angeschlossen ist.

10. Überwachungseinrichtung nach Anspruch 9,
**dadurch gekennzeichnet, daß** das bildübertragende Faserbündel (19) mit einem Optikkopf (20) an der Rückseite des Spiegelglases (1, 12) anliegt.

11. Überwachungseinrichtung nach einem der Ansprüche 1 bis 10,
**dadurch gekennzeichnet, daß** die Kamera (10) mit einem vorteilhaft im Bereich hinter dem Spiegelglas (1, 12) angeordneten Restlichtverstärker (22) ausgestattet ist.

## Claims

1. Monitoring device for vehicles, preferably for motor vehicles, having at least one piece of mirrored glass (1, 12) which is arranged in a mirror housing (17) and has a mirrored layer (5) which has a reflective effect in the visible spectral region and behind which at least one camera (10) is arranged, **characterized in that** the camera (10) is assigned an additional lighting means (11) which is arranged behind the mirrored layer (5) and emits light with a wavelength which the mirrored layer (5) transmits, and **in that** the camera (10) records video images through the mirrored layer (5) which extends over the entire reverse side and/or front side of the mirrored glass.

2. Monitoring device for vehicles, preferably for motor vehicles, having at least one piece of mirrored glass (1, 12) which is arranged in a mirror housing (17) and has a mirrored layer (5) which has a reflective effect in the visible spectral region and behind which at least one camera (10) is arranged, **characterized in that** the camera (10) records video images through the mirrored layer (5) which extends over the entire reverse side and/or front side of the mirrored glass, and **in that** the camera (10) is assigned an additional lighting means (11) in the form of LEDs, which is located in the edge region (18) of the mirror housing (17), which edge region (18) is composed of a material which is nontransparent to the human eye.

3. Monitoring device according to Claim 1 or 2, **characterized in that** the mirrored layer (5) is an interference mirrored layer, a chromium mirrored layer or a titanium-chromium mirrored layer.

4. Monitoring device according to one of Claims 1 to 3, **characterized in that** the mirrored glass (1) is an EC mirrored glass or a conventional mirrored glass.

5. Monitoring device according to Claim 4, **characterized in that** the EC mirrored glass (1) has an EC layer (3) behind which the mirrored layer (5) is provided.

6. Monitoring device according to one of Claims 1 to 5, **characterized in that** the additional lighting means (11) emits light outside the visible spectrum.

7. Monitoring device according to one of Claims 1 to 6, **characterized in that** the additional lighting means (11) is formed by LEDs, preferably by infrared transmitting LEDs.

8. Monitoring device according to one of Claims 1 to 7, **characterized in that** the additional lighting means (11) is formed by LEDs which are arranged next to one another and one underneath the other in rows.

9. Monitoring device according to one of Claims 1 to 8, **characterized in that** an image-transmitting fibre bundle (19) is connected to the camera (10).

10. Monitoring device according to Claim 9, **characterized in that** the image-transmitting fibre bundle (19) bears with an optical head (20) against the reverse side of the mirrored glass (1, 12).

11. Monitoring device according to one of Claims 1 to 10, **characterized in that** the camera (10) is equipped with a residual light amplifier (22) which is advantageously arranged in the region behind the mirrored glass (1, 12).

## Revendications

1. Dispositif de surveillance pour véhicules, en particulier pour véhicules à moteur, comportant au moins un miroir (1, 12) disposé dans un boîtier de rétroviseur (17), qui présente une couche de miroir (5) réfléchissant dans le domaine spectral visible, derrière laquelle est disposée au moins une caméra (10),
**caractérisé en ce qu'**un éclairage supplémentaire (11) est associé à la caméra (10), qui est disposé derrière la couche de miroir (5) et émet une lumière dans une longueur d'onde, pour laquelle la couche de miroir (5) est transparente, et **en ce que** la caméra (10) enregistre des images vidéo à travers la couche de miroir (5), qui s'étend sur tout le côté arrière et/ou avant du rétroviseur.

2. Dispositif de surveillance pour véhicules, de préférence pour des véhicules à moteur, comportant au moins un miroir (1, 12) disposé dans un boîtier de rétroviseur (17), qui présente une couche de miroir (5) réfléchissant dans le domaine spectral visible, derrière laquelle est disposée au moins une caméra (10),
**caractérisé en ce que** la caméra (10) enregistre des images vidéo à travers la couche de miroir (5), qui s'étend sur tout le côté arrière et/ou avant du rétroviseur, et **en ce qu'**un éclairage supplémentaire (11) sous forme de LED est associé à la caméra (10), qui se trouve dans la zone périphérique (18) du boîtier de rétroviseur (17), qui est constitué d'un matériau invisible à l'oeil humain.

3. Dispositif de surveillance selon la revendication 1 ou 2, **caractérisé en ce que** la couche de miroir (5) est une couche de miroir d'interférences, une couche de miroir au chrome ou une couche de miroir au titane-chrome.

4. Dispositif de surveillance selon l'une des revendications 1 à 3, **caractérisé en ce que** le verre à glace (1) est un miroir CE ou un miroir classique.

5. Dispositif de surveillance selon la revendication 4, **caractérisé en ce que** le miroir CE (1) présente une couche CE (3), derrière laquelle la couche de miroir (5) est prévue.

6. Dispositif de surveillance selon l'une des revendications 1 à 5, **caractérisé en ce que** l'éclairage supplémentaire (11) émet une lumière hors du spectre visible.

7. Dispositif de surveillance selon l'une des revendications 1 à 6, **caractérisé en ce que** l'éclairage supplémentaire (11) est constitué de LED, de préférence de LED émettrices infrarouges.

8. Dispositif de surveillance selon l'une des revendications 1 à 7, **caractérisé en ce que** l'éclairage supplémentaire (11) est constitué de LED disposées en rangées les unes à côté des autres et les unes en dessous des autres.

9. Dispositif de surveillance selon l'une des revendications 1 à 8, **caractérisé en ce qu'**un faisceau de fibres optiques (19) transmettant une image est relié à la caméra (10).

10. Dispositif de surveillance selon la revendication 9, **caractérisé en ce que** le faisceau de fibres optiques (19) est en contact d'une tête optique (20) sur le côté arrière du miroir (1, 12).

11. Dispositif de surveillance selon l'une des revendications 1 à 10, **caractérisé en ce que** la caméra (10) est équipée d'un amplificateur de lumière résiduelle (22) disposé avantageusement dans la zone derrière le miroir (1, 12).
